(19) Europäisches Patentamt
European Patent Office
Office européen des brevets

(11) **EP 0 874 233 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(51) Int Cl.:
***G01N 21/39*** *(2006.01)*

(21) Anmeldenummer: **98107030.3**

(22) Anmeldetag: **17.04.1998**

(54) **Gassensor zur selektiven Detektion von Gasen**

Selective gas sensor

Capteur permettant une détection sélective de gaz

(84) Benannte Vertragsstaaten:
**AT BE GB NL**

(30) Priorität: **23.04.1997 DE 19717145**

(43) Veröffentlichungstag der Anmeldung:
**28.10.1998 Patentblatt 1998/44**

(73) Patentinhaber: **SIEMENS AKTIENGESELLSCHAFT**
**80333 München (DE)**

(72) Erfinder:
• **Magori, Erhard**
**81539 München (DE)**

• **Meixner, Hans, Prof.**
**85540 Haar (DE)**
• **Fleischer, Maximilian**
**85635 Höhenkirchen (DE)**
• **Strzoda, Rainer**
**81739 München (DE)**

(56) Entgegenhaltungen:
EP-A- 0 709 659      GB-A- 2 231 951
US-A- 5 047 639      US-A- 5 625 189

• UEHARA K ET AL: "Real-time monitoring of environmental methane and other gases with semiconductor lasers: A review" SENSORS AND ACTUATORS B, Bd. 38, Nr. 1-3, Januar 1997, Seite 136-140 XP004083683

EP 0 874 233 B1

**Beschreibung**

Die Erfindung betrifft einen Gassensor zur selektiven Gasdetektion, sowie zur Messung der entsprechenden Gaskonzentration unter Verwendung von Lichtstrahlen im nahen Infrarotbereich.

Für eine Vielzahl von Aufgaben im Bereich Sicherheit, Komfort und Umweltschutz besteht ein großer Bedarf an kostengünstigen und zuverlässigen Gassensoren. Insbesondere ist die Luft auf explosive, toxische oder dem Menschen unbehagliche Gaskonzentrationen zu überwachen. Die verbesserten Eigenschaften der heute erhältlichen DFB-Laserdioden (distributed feed back) können vorteilhaft in der optischen Gasdetektion im nahen Infrarotbereich verwendet werden. Das Materialsysteme InGaAsP (Indium Gallium Arsenid Phosphid) erlaubt Laserdioden im Wellenlängenbereich zwischen 1,1 und 2,0 $\mu$m herzustellen. Für die Gasdetektion eignen sich insbesondere die spektral einmodigen DFB-Laserdioden, die mittlerweile auch für Betriebstemperaturen bis zu 100°C hergestellt werden können. Auf der Seite der Gase existieren Moleküle, die Absorptionsbanden im nahen Infrarotbereich aufweisen. Hier sind beispielsweise zu nennen, $H_2O$, $CO$, $CO_2$, $NH_3$, $HF$, $CH_4$, $HCl$, $NO_2$, $O_2$.

Speziell wasserstoffhaltige Moleküle, wie z.B. Methan ($CH_4$) zeigen eine relativ starke Absorption in diesem Wellenlängenbereich, was die technische Machbarkeit des Nachweises vereinfacht und somit die Anwendung von Laserdioden im nahen Infrarotbereich zur Methandetektion favorisiert.

Für die Sicherheit im Umgang mit erdgasbetriebenen Feuerungsanlagen und Herden im häuslichen Bereich, sowie im Untertagebau und der Erdgasförderung und -Versorgung besteht ein Bedarf an Methansensoren, die in der Lage sind, Methankonzentrationen weit unterhalb der Zündschwelle (5 Vol %) sicher zu detektieren. Dafür wird eine Nachweisschwelle zwischen 3 und 20% (entsprechend 0,15-1 Vol %) der unteren Zündgrenze gefordert. Hierzu gilt folgende Norm: [1] Electric apparatus for the detection of combustible gases in domestic premises, Europäische Norm, Final Draft prEN 50194, May 1995. Genauso wichtig wie die sichere Detektion des Methans ist auch der Ausschluß von Fehlalarmen aufgrund von Störgasen oder aufgrund von Alterungserscheinungen des Sensors. Daneben sind die Wartungsfreiheit und Langzeitstabilität der Kalibrierung für den Einsatz im Privathaushalt unerläßlich.

Die Methandetektion erfolgt derzeit im wesentlichen mit Festkörpersensoren. Gegenwärtig verfügbare Sensoren erfüllen die technischen Anforderungen zum Teil nur unzureichend. Pellistor-Gasdetektoren, die auf der Basis einer katalytischen Verbrennung des Methans detektieren, sind anfällig gegen bestimmte Störgase, wie beispielsweise siliziumhaltige Gase. Durch die Störgase wird ein Empfindlichkeitsverlust bewirkt und somit die Detektionssicherheiten in Frage gestellt.

Zur Methandetektion werden auch Metalloxiddetektoren eingesetzt. Das am häufigsten verwendete Material dafür ist Zinnoxid. Diese Sensoren sind generell querempfindlich gegenüber anderen reduzierenden Gasen und auch gegen Luftfeuchtigkeit, was zum Auslösen von Fehlalarmen führen kann. Reduzierende Gase sind beispielsweise Alkohol, Propan/Butan als Treibgas von Gasflaschen oder flüchtige organische Gase. Häufige Fehlalarme führen jedoch dazu, daß Gaswarnungen nicht mehr Ernst genommen werden. Die Kombination einer Gasdetektion mit einer automatischen Absperrung der Gaszufuhr im Alarmfall führt zur Verunsicherung und Verärgerung des Anwenders, wenn die Gasdetektion unzuverlässig ist und Fehlalarme auftreten.

Die wartungsfreie Lebensdauer der bekannten Festkörpersensoren liegt zwischen einem und fünf Jahren. Die vom Markt geforderte Lebensdauer für einen Methandetektor liegt aber bei mehr als 10 Jahren.

Neben den Festkörpersensoren wird auch die Infrarotabsorption in der Kohlenwasserstoffbande bei 3 $\mu$m Wellenlänge verwendet. Die Wellenlängenselektion erfolgt hierbei mit einem Interferenzfilter. Wegen der gegenseitigen Überlageruung der Absorptionsbanden der verschiedenen Kohlenwasserstoffe ist mit diesem Verfahren beispielsweise eine selektive Erfassung von Methan nicht möglich. In der Absorptionsmessung im nahen Infrarotbereich (NIR) mit Laserdioden werden spezielle Schwerpunkte gesetzt. In der Regel bezieht sich das Nachweisverfahren auf kleinste Konzentrationen, verbunden mit aufwendigen Meßanordnungen. Hierbei sind die folgenden Literaturstellen zu nennen:

[2] Y.Shimose, T. Okamoto, A. Maruyama, H. Nagai, Remote Sensing of Methane Gas by Differential Absorption Measurement Using a Wavelength Tunable DFB LD, IEEE Photonics Technology Letters, Vol. 3, No. 1, January 1991, 86-87

[3] Kiyoji Uehara, Hideao Tai, Remote detection of methane with a 1.66-$\mu$m diode laser, Applied Optics, 20 Febr. 1992, Vol. 31, No. 6, 809-814

[4] R.U. Martinelli, R.J. Menna, D.E. Cooper, C.B. Carlisle, H. Riris, Near-Infrared InGaAs/InP Distributed-Feedback Lasers for Spectroscopic Applications, Proc. SPIE-Int.Soc.Opt.Eng. (USA), Laser Diode Technology and Applications VI, Vol 2148, 292-307, 1994.

Ein Aufbau für die Methandetektion mit Laserdioden in der zweiten Oberwellenbande von Methan bei 1,325 $\mu$m wurde angegeben von: [5] M.T. Pichery Les detecteurs de gaz domestiques par méthode optique, Gaz d'aujourd'hui, N°6, 1996, 271-273. Darin wird wegen der geringen Absorptionsstärke in der zweiten Oberwellenbande eine Mehrwegzelle mit großer Absorptionslänge (größer als 1m) benötigt. Bei diesem hier beschriebenen Aufbau steht ein kostengünstiger Aufbau eines derartigen Sensors im Vordergrund.

Die Konzentrationsbestimmung von Gasen mit der Infrarottechnik beruht auf der Absorptionsmessung in den Vibrations-Rotationsbanden der Gase. Für die optische Absorption gilt das bekannte Lambert-Beersche Absorptionsgesetz:

$$I(\nu) = I_0 \cdot e^{-\alpha(\nu)c \cdot l}$$

Darin bedeuten $I_0$ die eingestrahlte Intensität, c die Gaskonzentration und $\alpha$ ($\mu$) den wellenlängenabhängigen Absorptionskoeffizienten. Die Absorption findet innerhalb der optischen Wellenlänge 1 statt. $\alpha$ ($\mu$) setzt sich zusammen aus der Linienstärke und dem Absorptionsprofil (Lorentzprofil bei Normaldruck).

Der Erfindung liegt die Aufgabe zugrunde einen Gassensor zum selektiven Nachweis vorbestimmter Gase bereitzustellen, wobei die Anforderungen bezüglich der Nachweisgrenzen und der Zuverlässigkeit erhöht sind und der Sensoraufbau kostengünstig ist.

Die Lösung dieser Aufgabe geschieht durch die Ansprüche 1 oder 2.

Der Erfindung liegt die Erkenntnis zugrunde, daß die schmalbandige Messung der Absorption mittels Laserlichtquellen die spektral aufgelöste Messung einzelner Absorptionslinien und damit die Selektion einer einzelnen Gaskomponente erlaubt. Im nahen Infrarotlichtbereich liegen die Oberwellen der Molekülschwingungen. Mit dem Materialsystem InGaAsP können Laserdioden, die Licht in diesem Bereich emittieren, hergestellt werden. Der Bereich des nahen Infrarotlichtes reicht ungefähr von 0,65 bis 2 $\mu$m Wellenlänge. Die spektrale Linienbreite des Lasers beträgt weniger als 10 MHz und liegt damit bei dem 0,01-fachen der Halbwärtsbreite einer typischen Gasabsorptionslinie. Die Abhängigkeit der Emissionswellenlänge der genannten Laserdioden von der Temperatur (typischer Weise 0,1 nm/K) bzw. vom Laserstrom wird dazu benutzt, das Spektrum von mindestens einer Absorptionslinie aufzunehmen. Liegen zwei Spektrallinien relativ nahe zusammen, so kann es sinnvoll sein, mehr als eine Linie aufzunehmen. Das Spektrum kann mit einer theoretischen Berechnung der Absorptionslinie verglichen werden, wobei als wesentlicher Parameter aus dem Vergleich die Gaskonzentration gewonnen wird. Diese Methode weist zwei wesentliche Vorteile auf. Zum einen entfällt eine Kalibrierung des Meßaufbaues mit Prüfgasen. Zum anderen ist dieses Verfahren in weiten Grenzen unabhängig von der Transmission der Absorptionsstrecke (Meßstrecke), so daß Verschmutzungen von optischen Fenstern keinen Einfluß auf das Meßergebnis haben.

Im folgenden werden anhand der begleitenden schematischen Figuren Ausführungsbeispiele beschrieben.

Figur 1 zeigt einen kompakten Aufbau eines Methandetektors mit Laserdiode, Hohlspiegel und Photodetektor,
Figur 2 zeigt einen Ausschnitt aus Figur 1,
Figur 3a und 3b zeigen einen Methandetektor ohne fokussierende Optikelemente mit gefaltetem und mit gestrecktem Aufbau,
Figur 4 zeigt die Temperaturabstimmung der Laserwellenlänge mit einem Strompuls konstanter Amplitude.

Laserdioden weisen im allgemeinen eine stark divergente Abstrahlcharakteristik auf (Öffnungswinkel 10° bis 40°). Der hier beschriebene Methandetektor benötigt für die Messung der kleinsten geforderten Methankonzentration (beispielsweise 1500 ppm) eine Absorptionslänge (Meßstrecke) von weniger als 10 cm, wenn die Messung in der ersten Oberwellenbande bei 1,66 $\mu$m Lichtwellenlänge erfolgt. Der kompakte Detektoraufbau ergibt sich durch die Verwendung eines einzigen Hohlspiegels der das divergente Laserlicht auffängt und auf den Photodetektor 2 fokussiert. Dabei wird der Strahlengang zweimal durch das Meßgas 6 geleitet. Durch diesen Aufbau ergeben sich folgende Vorteile:

- Die Aufbaulänge wird durch die Faltung des Absorptionsweges in erster Näherung halbiert.
- Gegenüber dem konventionellen Aufbau entfällt ein optisches Element, wie beispielsweise eine Linse.
- Laser 1 und Photodetektor 2 können in einem gemeinsamen Gehäuse 4 untergebracht werden, was die Herstellung verbilligt.

Das Laseraustrittsfenster wird in vorteilhafterweise nicht 1 : 1 auf den Photodetektor 2 abgebildet, sondern vergrößert, so daß nur ein Teil der Strahlung den Photodetektor 2 erreicht. Daraus ergeben sich folgende Vorteile:

- Die Justierung des Hohlspiegels wird vereinfacht.
- Eine Dejustierung der Optik während des Betriebes führt nicht zum Verlust des Signales.
- es können kleinflächige Photodioden verwendet werden, wobei der Betrieb im linearen Bereich der Kennlinie gewährleistet wird, so dass Übersteuerungen vermieden werden.

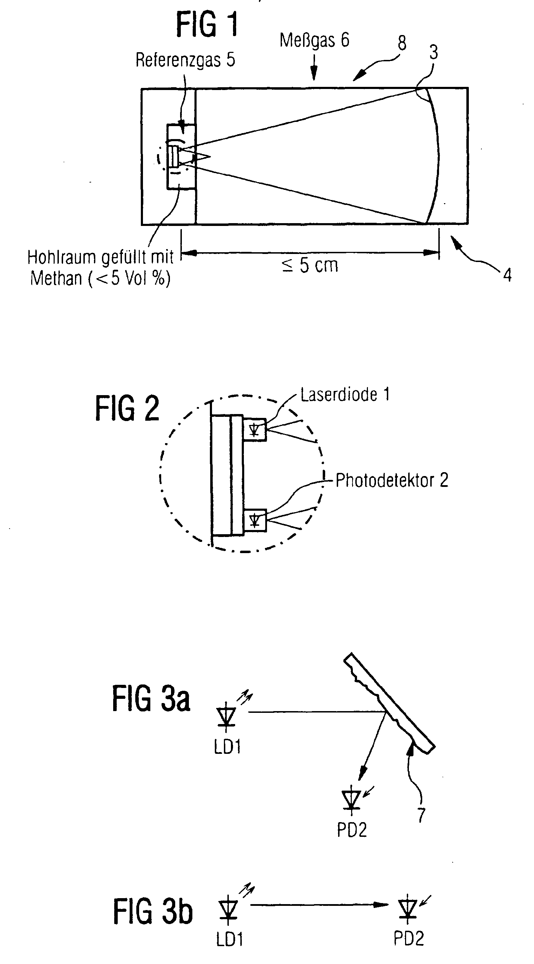

Anstelle des Hohlspiegels kann auch eine diffus reflektierende Oberfläche eingesetzt werden. Dabei muß der Photodetektor 2 derart angebracht sein, daß ein Anteil des reflektierten Lichtes auf seine Oberfläche trifft, wie es in Figur 3a dargestellt wird. Anstelle des gefalteten Aufbaus nach Figur 3a kann auch ein gestreckter Aufbau ohne optische Elemente angewandt werden, siehe Figur 3b. Wesentliche Vorteile lassen sich jedoch mit dem Aufbau entsprechend Figur 1 unter Verwendung eines Hohlspiegels erzielen.

In einem Meßsystem das Laserdioden verwendet, wird häufig die Laserstrahlung in einen Meßzweig und in einen Referenzzweig aufgeteilt. Im Referenzzweig befindet sich ein Gas bzw. eine Gaszelle mit einer ausreichenden Konzentration der zu messenden Gaskomponente. Die Absorption in der Referenzzelle wird zur Wellenlängenstabilisierung der Laserdiode 1 auf die Gasabsorptionslinie benutzt.

Die Wellenlängenabhängigkeit der Laseremission von der Temperatur würde zunächst der Kontrolle der Lasertemperatur erfordern, um eine vorbestimmte Lichtwellenlänge einzustellen. Im allgemeinen wird dazu der Laser auf einer Wärmesenke mit einem Peltierelement betrieben. Ein Temperaturfühler und ein Temperaturfühler halten die Lasertemperatur konstant. Die neuartigen DFB-Laserdioden erlauben einen Betrieb oberhalb der normalen Umgebungstemperaturen. Daher kann die Temperaturstabilisierung der Laserdiode 1 mit einer elektrischen Widerstandsheizung anstelle eines Peltierelementes erfolgen. Diese Heizung kann auf dem Laserchip bzw. auf dessen Träger direkt realisiert werden. Die Temperaturmessung erfolgt vorzugsweise mit einem Metallschichtwiderstand, der auf der Oberfläche des Laserchips aufgebracht ist. Genausogut kann die Temperaturabhängigkeit der Laserdiodenkennlinie zur Temperaturmessung benutzt werden.

Bei dem erfindungsgemäßen Methandetektor wird eine Referenzgaszelle direkt im Meßzweig angeordnet, so daß eine permanente Vorabsorption stattfindet. Die Vorabsorption wird im Meßsystem zur relativen Wellenlängeneichung herangezogen. Die zu messende Gaskonzentration wird aus dem Zuwachs der Absorption gewonnen. Dabei ist anzumerken, daß die Referenzzelle als eigenständige Küvette ausgeführt sein kann. Es ist jedoch vorteilhaft, das Gehäuse 4 derart zu gestalten, dass eine Referenzgaszelle mit dem entsprechenden Referenzgas 5 im Gehäuse integriert ist. Entsprechend Figur 1 ist ein Hohlraum vorgesehen, indem ein Referenzgas mit Methan beinhaltet ist, so daß eine Wellenlängeneichung möglich ist. Die dadurch ständig vorhandene Absorption aufgrund des Vorhandenseins von Methan muß bei der Gesamtabsorption berücksichtigt werden. Alternativ zu dem Referenzgas 5, das einen Anteil des zu detektierenden Gases (Meßgas 6) enthält, kann auch eine benachbarte atmosphärische Absorptionslinie von beispielsweise $H_2O$ oder $CO_2$ zur Wellenlängeneichung herangezogen werden. In den Figuren 1, 2 und 3a und 3b werden Einzelheiten von Gassensoren dargestellt, wie beispielsweise die Laserdiode 1, der Photodetektor 2, der Hohlspiegel 3, das Gehäuse 4, ein Referenzgas 5, ein Meßgas 6, eine Meßstrecke 8 und eine diffus reflektierende Oberfläche 7. Entsprechend Figur 1 weist ein erfindungsgemäßer Gassensor eine sehr geringe Baugröße aufgrund der Faltung des Strahlenganges durch das Meßgas 6 auf. Der Hohlspiegel 3 sorgt für entsprechende Fokussierungen der Strahlengänge. Das Referenzgas 5 ist in einer im Gehäuse 4 integrierten Referenzgaszelle untergebracht und umgibt die Laserdiode 1 und den Photodetektor 2.

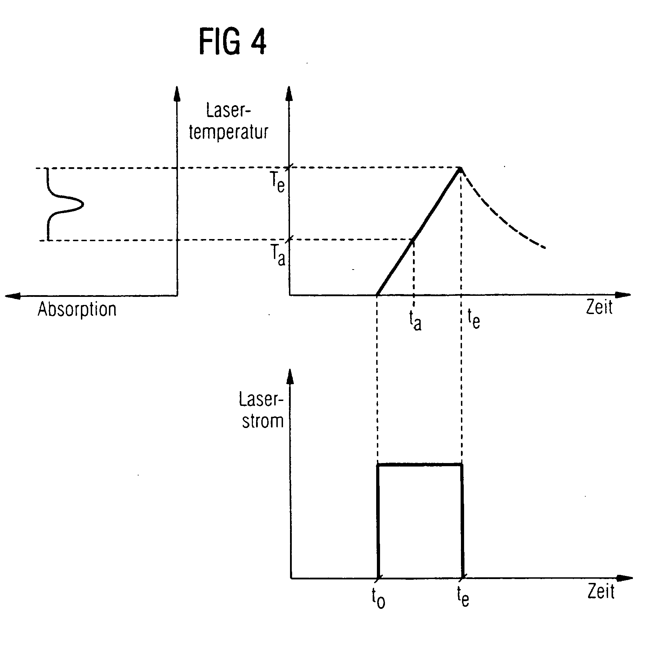

Die Durchstimmung der Laserdiodentemperatur wird anhand der Figur 4 beschrieben. Die Durchstimmung der Laserdiodentemperatur zur Spektralmessung kann auf verschiedene Art und Weisen geschehen. Erfindungsgemäß wird die Wellenlängenabhängigkeit der Laserdiode 1 von der Laserdiodenbetriebstemperatur ausgenutzt. Diese Temperatur wird entweder durch eine externe Heizung mit einer entsprechenden Regelung oder durch den Laserstrom selbst bewirkt. Bei dem beschriebenen Methandetektor erfolgt die Durchstimmung der Temperatur durch Anlegen eines konstanten Stromes zu einem Zeitpunkt $t_0$ an die Laserdiode entsprechend Figur 4. Bedingt durch die Energiedissipation im Bahnwiderstand der realen Diode erwärmt sich der Laser. Die Geschwindigkeit der Temperaturänderung hängt dabei von der zugeführten Leistung, der Wärmekapazität des Chips und dem Wärmeübergangswiderstand zur Umgebung ab. Während des Temperaturanstieges wird die spektrale Messung durchgeführt. Wird simultan die Laserchiptemperatur gemessen, so erübrigt sich eine externe Temperaturregelung. Die Messung wird dann beim Erreichen der Startemperatur $T_a$ (die einer bestimmten Lichtwellenlänge entspricht) initiiert und bei Erreichen der Stoptemperatur $T_e$ beendet.

Liegt ein lernfähiges System vor, so kann auf eine ständig begleitende Temperaturmessung verzichet werden, da beispielsweise die Laserdiode mit dem Strom über den maximalen Temperaturbereich durchgestimmt wird. Anhand der gemessenen Refernzabsorption und dem bekannten Kennlinienfeld der Laserdiode kann der entsprechende Meßbereich mit den Grenzen der Startzeit $t_a$ und der Stopzeit $t_e$ festgelegt werden. Die Absorptionslinie liegt dann im Meßfenster. Eine Abweichung von der idealen Lage der Absorption infolge einer Änderung der Umgebungstemperatur kann von einer Messung zur nächsten durch Anpassung der Start- bzw. Stopzeiten fortlaufend korrigiert werden.

Die drei zusammenhängende Diagramme der Figur 4 zeigen, daß die Laserdiode 1 innerhalb der Zeitgrenzen $t_0$ und $t_e$ mit einem konstanten Strom betrieben wird. Innerhalb der Zeitgrenzen $t_a$ und $t_e$ liegt die Meßzeit. Eine Messung dauert beispielsweise 1 Sekunde und wird beispielsweise alle 30 Sekunden wiederholt. Aufgrund der Temperaturabhängigkeit der Emissionswellenlänge des Lasers wird in dem Zeitfenster $t_a$ - $t_e$ die Lasertemperatur von $T_a$ auf $T_e$ steigen. Dieser Bereich für das Durchstimmen der Lasertemperatur wird erfindungsgemäß auf eine oder mehrere ausgewählte Spektrallinien des zu messenden-Gases gelegt. Somit ist gewährleistet, daß bei vorhandenem Meßgas 6 die Spektrallinie bzw. beim Einsatz eines identischen Referenzgases eine Absorptionsdifferenz in Form einer Intensitätverminderung des empfangenen Lichtes detektierbar ist. Nachdem die spektrale Linienbreite des Lasers um das 100-fache geringer ist als die Halbwertsbreite einer typischen Gasabsorptionslinie (Spektrallinie) kann die ausgewählte Spektrallinie sehr genau abgetastet bzw. gescannt werden. Die Laserdiode 1 wird dabei oberhalb der Raumtemperatur betrieben, so daß sie von der Stoptemperatur $T_e$ bis zum nächsten Meßzyklus wieder abkühlen kann.

Somit ist ein minimaler Abstand der Starttemperatur $T_a$ zur Raumtemperatur notwendig. Eine Raumtemperaturgrenze nach oben hin besteht durch die maximale Betriebstemperatur einer Laserdiode 1, oberhalb der keine Lichtemission mehr stattfindet. Da Weiterentwicklungen bei den Laserdioden regelmäßig stattfinden, wird lediglich darauf hingewiesen, daß derzeit Laserdioden mit einer maximalen Betriebstemperatur von mehr als 100° verfügbar sind. Nachdem mit dem erfindungsgemäßen Verfahren bzw. mit dem entsprechenden Gassensor Gaskonzentrationen auf der Grundlage der Absorptionsmessung geschieht, kann zusätzlich zur beschriebenen Funktion auch die Funktion eines Rauchmelders übernommen werden, wenn innerhalb kurzer Zeit eine übermäßige Abnahme der Gesamttransmission auftritt. Zu diesem Zweck wird die schnelle Änderung der Gesamttransmission der Absorptionsstrecke ausgewertet.

Genausogut wie Methan kann die Detektion anderer Gase im nahen Infrarotbereich geschehen.

**Patentansprüche**

1. Gassensor zur Durchführung eines Verfahrens zur selektiven Detektion von Gasen im nahen Infrarotbereich und zur Messung einer Gaskonzentration durch Lichtabsorption, bestehend aus folgenden Schritten:

   - von einer durchstimmbaren DFB-Laserdiode (1) in eine Messstrecke ausgesandtes Licht im nahen Infrarotbereich wird von einem Photodetektor (2) empfangen,
   - die Laserdiode (1) wird bei Temperaturen betrieben, die oberhalb der Raumtemperatur liegen und mindestens 40°C betragen,
   - mindestens eine Spektrallinie des Spektrums des zu detektierenden Gases wird ausgewählt und die Laserdiode (1) mit einer korrespondierenden Emissionswellenlänge wird eingesetzt,
   - zur Spektralmessung wird die Laserdiodentemperatur durchgestimmt, so dass die entsprechende zu detektierende ausgewählte Spektrallinie durch die betriebstemperaturabhängige Emissionswellenlänge abgetastet wird,
   - eine Absorption bzw. eine Absorptionsdifferenz im Bereich der Spektrallinie wird zur Detektion und zur Messung der Gaskonzentration ausgewertet, wobei zusätzlich die Absorption in einem Referenzgas zur Wellenlängeneichung verwendet wird und sich das Referenzgas direkt in der Messstrecke befindet, so dass eine permanente Vorabsorption stattfindet,
   - bestehend aus einer Referenzgaszelle mit entsprechendem Referenzgas, einem einzigen mit einem Messgas (6) befüllten Gehäuse (4) mit zur Messung von Spektrallinien durchstimmbarer DFB- Laserdiode (1) und Photodetektor (2), die in dessen Innenraum an der gleichen Seite benachbart angebracht sind, und ferner bestehend aus einem Hohlspiegel (3), wobei der Strahlengang des von der Laserdiode (1) emittierten Lichtes über den gegenüberliegenden Hohlspiegel (3) auf den Photodetektor (2) geleitet wird und die Referenzgaszelle direkt in der Messstrecke angeordnet ist.

2. Gassensor zur Durchführung eines Verfahrens zur selektiven Detektion von Gasen im nahen Infrarotbereich und zur Messung einer Gaskonzentration durch Lichtabsorption, bestehend aus folgenden Schritten:

   - von einer durchstimmbaren DFB-Laserdiode (1) in eine Messstrecke ausgesandtes Licht im nahen Infrarotbereich wird von einem Photodetektor (2) empfangen,
   - die Laserdiode (1) wird bei Temperaturen betrieben, die oberhalb der Raumtemperatur liegen und mindestens 40°C betragen,
   - mindestens eine Spektrallinie des Spektrums des zu detektierenden Gases wird ausgewählt und die Laserdiode (1) mit einer korrespondierenden Emissionswellenlänge wird eingesetzt,
   - zur Spektralmessung wird die Laserdiodentemperatur durchgestimmt, so dass die entsprechende zu detektierende ausgewählte Spektrallinie durch die betriebstemperaturabhängige Emissionswellenlänge abgetastet wird,
   - eine Absorption bzw. eine Absorptionsdifferenz im Bereich der Spektrallinie wird zur Detektion und zur Messung der Gaskonzentration ausgewertet, wobei zusätzlich die Absorption in einem Referenzgas zur Wellenlängeneichung verwendet wird und sich das Referenzgas direkt in der Messstrecke befindet, so dass eine permanente Vorabsorption stattfindet,
   - bestehend aus einer Referenzgaszelle mit entsprechendem Referenzgas, einem einzigen mit einem Messgas (6) befüllten Gehäuse (4) mit zur Messung von Spektrallinien durchstimmbar DFB-Laserdiode (1) und Photodetektor (2), die in dessen Innenraum an der gleichen Seite benachbart angebracht sind, und ferner bestehend aus einer diffus reflektierenden Oberfläche (7), wobei der Strahlengang des von der Laserdiode (1) emittierten Lichtes über die gegenüberliegende diffus reflektierende Oberfläche (7) auf den Photodetektor (2) geleitet wird und die Referenzgaszelle direkt in der Messstrecke angeordnet ist.

3. Gassensor nach Anspruch 1 oder 2, worin eine elektrische Widerstandsheizung zur Einstellung einer Betriebstemperatur der DFB-Laserdiode (1) vorhanden ist.

## Claims

**1.** Gas sensor for carrying out a method for selective detection of gases in the near infrared range and for measuring a gas concentration by light absorption, comprising the following steps:

- Light emitted by a tunable DFB laser diode (1) in a measurement path in the near infrared range is received by a photodetector (2),
- The laser diode (1) is operated at temperatures which lie above the room temperature and amount to at least 40°C,
- At least one spectral line of the spectrum of the gas to be detected is selected and the laser diode (1) with a corresponding emission wavelength is used,
- For spectral measurement the laser diode temperature is tuned so that the corresponding selected spectral line to be detected is sampled by the operating-temperature-dependent emission wavelength,
- An absorption or an absorption difference respectively in the range of the spectral line is evaluated for detection and measuring the gas concentration, with the absorption in a reference gas additionally being used for wavelength calibration and the reference gas being located directly in the measurement path, so that a permanent pre-absorption takes place,
- Consisting of a reference gas cell with corresponding reference gas, a single housing (4) filled with a measurement gas (6) with tunable DFB laser diode (1) and photodetector (2) for measuring spectral lines, which are accommodated in its interior adjacent to each other on the same side, and further consisting of a concave mirror (3), with the beam entry of the light emitted by the laser diode (1) being directed via the opposing concave mirror (3) onto the photodetector (2) and the reference gas cell being arranged directly in the measurement path.

**2.** Gas sensor for carrying out a method for selective detection of gases in the near infrared range and for measuring a gas concentration by light absorption, comprising the following steps:

- Light emitted by a tunable DFB laser diode (1) in a measurement path in the near infrared range is received by a photodetector (2),
- The laser diode (1) is operated at temperatures which lie above the room temperature and amount to at least 40°C,
- At least one spectral line of the spectrum of the gas to be detected is selected and the laser diode (1) with a corresponding emission wavelength is used,

- For spectral measurement the laser diode temperature is tuned, so that the corresponding selected spectral line to be detected is sampled by the operating-temperature-dependent emission wavelength,
- An absorption or an absorption difference respectively in the range of the spectral line is evaluated for detection and measuring the gas concentration, with the absorption in a reference gas additionally being used for wavelength calibration and the reference gas being located directly in the measurement path, so that a permanent pre-absorption takes place,
- Consisting of a reference gas cell with corresponding reference gas, a single housing (4) filled with a measurement gas (6) with tunable DFB laser diode (1) and photodetector (2) for measuring spectral lines, which are accommodated in its interior adjacent to each other on the same side, and further consisting of a diffuse reflecting surface (7), with the beam entry of the light emitted by the laser diode (1) being directed via the opposing diffuse reflecting surface (7) onto the photodetector (2) and reference gas cell being arranged directly in the measurement path.

**3.** Gas sensor according to claim 1 or 2, in which an electrical resistive heater is present for setting an operating temperature of the DFB laser diode (1).

## Revendications

**1.** Capteur de gaz pour la réalisation d'un procédé destiné à la détection sélective de gaz dans le spectre infrarouge proche et à la mesure d'une concentration de gaz par absorption de la lumière, constitué des étapes suivantes :

- de la lumière dans le spectre infrarouge proche, émise par une diode laser DFB variable (1) dans une section de mesure, est reçue par un photodétecteur (2),
- la diode laser (1) est mise en fonction à des températures qui sont situées au-delà de la température ambiante et qui sont au moins de 40°C,
- au moins une raie spectrale du spectre du gaz à détecter est sélectionnée et la diode laser (1) est utilisée avec une longueur d'onde d'émission correspondante,
- pour la mesure spectrale, la température de la diode laser est variée, de sorte que la raie spectrale correspondante sélectionnée à détecter est balayée par la longueur d'onde d'émission dépendante de la température de fonctionnement,
- une absorption resp. une différence d'absorption dans la région de la raie spectrale est évaluée pour la détection et pour la mesure de la concentration de gaz, l'absorption dans un gaz de référence destiné à la calibration de la longueur d'onde étant utilisée en supplément et le gaz de référence se trouvant directement dans la section de mesure, de sorte qu'une pré-absorption permanente a lieu,

- constitué d'une cellule gazeuse de référence comprenant un gaz de référence correspondant, un seul boîtier (4) rempli d'un gaz de mesure (6), comprenant une diode laser DFB variable (1) pour la mesure de raies spectrales et un photodétecteur (2), qui sont installés à l'intérieur du boîtier de manière adjacente sur le même côté, et constitué en outre d'un miroir concave (3), le trajet du faisceau de la lumière émise par la diode laser (1) étant guidé sur le photodétecteur (2) par l'intermédiaire du miroir concave opposé (3) et la cellule gazeuse de référence étant disposée directement dans la section de mesure.

2. Capteur de gaz pour la réalisation d'un procédé destiné à la détection sélective de gaz dans le spectre infrarouge proche et à la mesure d'une concentration de gaz par absorption de la lumière, constitué des étapes suivantes :

- de la lumière dans le spectre infrarouge proche, émise par une diode laser DFB variable (1) dans une section de mesure, est reçue par un photodétecteur (2),
- la diode laser (1) est mise en fonction à des températures qui sont situées au-delà de la température ambiante et qui sont au moins de 40°C,
- au moins une raie spectrale du spectre du gaz à détecter est sélectionnée et la diode laser (1) est utilisée avec une longueur d'onde d'émission correspondante,
- pour la mesure spectrale, la température de la diode laser est variée, de sorte que la raie spectrale correspondante sélectionnée à détecter est balayée par la longueur d'onde d'émission dépendante de la température de fonctionnement,
- une absorption resp. une différence d'absorption dans la région de la raie spectrale est évaluée pour la détection et pour la mesure de la concentration de gaz, l'absorption dans un gaz de référence destiné à la calibration de la longueur d'onde étant utilisée en supplément et le gaz de référence se trouvant directement dans la section de mesure, de sorte qu'une pré-absorption permanente a lieu,

- constitué d'une cellule gazeuse de référence comprenant un gaz de référence correspondant, un seul boîtier (4) rempli d'un gaz de mesure (6), comprenant une diode laser DFB variable (1) pour la mesure de raies spectrales et un photodétecteur (2), qui sont installés à l'intérieur du boîtier de manière adjacente sur le même côté, et constitué en outre d'une surface (7) réfléchissant de manière diffuse, le trajet du faisceau de la lumière émise par la diode laser (1) étant guidé sur le photodétecteur (2) par l'intermédiaire de la surface (7) réfléchissant de manière diffuse et la cellule gazeuse de référence étant disposée directement dans la section de mesure.

3. Capteur de gaz selon la revendication 1 ou 2, un chauffage à résistance électrique y étant présent pour le réglage d'une température de fonctionnement de la diode laser DFB (1).

EP 0 874 233 B1

# FIG 1

Referenzgas 5    Meßgas 6    8    3

Hohlraum gefüllt mit
Methan (<5 Vol %)

≤ 5 cm

4

# FIG 2

Laserdiode 1

Photodetektor 2

# FIG 3a

LD1

PD2

7

# FIG 3b

LD1    PD2

8

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Y.Shimose ; T. Okamoto ; A. Maruyama ; H. Nagai.** Remote Sensing of Methane Gas by Differential Absorption Measurement Using a Wavelength Tunable DFB LD. *IEEE Photonics Technology Letters,* Januar 1991, vol. 3 (1), 86-87
- **Kiyoji Uehara ; Hideao Tai.** Remote detection of methane with a 1.66-μm diode laser. *Applied Optics,* 20. Februar 1992, vol. 31 (6), 809-814
- **R.U. Martinelli ; R.J. Menna ; D.E. Cooper ; C.B. Carlisle ; H. Riris.** Near-Infrared InGaAs/InP Distributed-Feedback Lasers for Spectroscopic Applications. *Proc. SPIE-Int.Soc.Opt.Eng. (USA), Laser Diode Technology and Applications VI,* 1994, vol. 2148, 292-307
- **M.T. Pichery.** Les detecteurs de gaz domestiques par méthode optique. *Gaz d'aujourd'hui,* 1996, 271-273